# EUROPEAN PATENT APPLICATION

(11) **EP 4 451 645 A1**
(43) Date of publication of application: **23.10.2024**
(21) Application number: 23213521.0
(22) Date of filing: 30.11.2023
(51) Int. Cl.: H04L 67/12

(54) **COMMUNICATION SYSTEM AND METHOD, VEHICLE, AND MEDIUM**

(30) Priority: 17.04.2023 CN 202310409876
(71) Applicant: Chongqing Changan Automobile Co., Ltd., Chongqing 400023 (CN)
(72) Inventor: HAN, Sanchu, Chongqing, 400023 (CN); TAN, Bing, Chongqing, 400023 (CN); HU, Qijie, Chongqing, 400023 (CN); TANG, Guangyu, Chongqing, 400023 (CN); LI, Xueqing, Chongqing, 400023 (CN)
(74) Representative: Schulz Junghans Patentanwälte PartGmbB

(57) **Abstract**

Disclosed are a communication system and method, a vehicle, and a medium, relating to the technical field of communications. The communication system includes: a control end with a control function and a processing end with a processing function, where the control end includes one or more controllers, and the processing end includes one or more processors; and a gateway, deployed in a communication process of any processor in the processing end, where the gateway includes an internal space and an external space, is connected to a global data space through the external space, and is connected to the one or more controllers and other processors through the internal space; and on the basis of an authentication identifier configured for the processor, the processor is selected to communicate with other processors, the controllers are selected to directly communicate with the processor, or communication data between the controllers and the processor is forwarded through the gateway. Therefore, the problems of low applicability and the like caused by the fact that the controllers cannot accommodate entities in a quantity matched with the processors under a condition of limited resources of the controllers, and a communication delay in the prior art are solved.

## Description

### Field of the Invention

The present application relates to the technical field of communications, and in particular, to a communication system and method, a vehicle, and a medium.

### Background of the Invention

A Service-Oriented Architecture (SOA) software architecture is gradually used in the field of automobiles. Under a design concept of the SOA software architecture, automobile software architectures are developed towards stratification and modularization, so that functions of application layers can be reused on different vehicle models, hardware platforms, and operating systems, and application functions can be quickly iterated and upgraded through standardized interfaces.

A Data Distribution Service (DDS), as a new generation of distributed real-time communication middleware protocol, adopts a publishing/subscription architecture, emphasizes data centricity, and provides rich Quality of Service (QoS) policies, so as to ensure real-time, efficient, and flexible distribution of data, which can meet requirements of various distributed real-time communication applications.

In the related art, resources of a controller that can be allocated to a DDS protocol stack are limited. A remote entity of a processor will be built on a controller to satisfy communication between the processor and the controller, which will consume a large number of the resources of the controller. The controller cannot accommodate proxy entities in a quantity that is matched with the processor side. As a result, the communication delay is large.

### Summary of the Invention

The present application provides a communication system and method, a vehicle, and a medium, so as to solve the problems of low applicability and the like caused by the fact that controllers cannot accommodate entities in a quantity matched with a processing end under a condition of limited resources of the controllers, and a communication delay in the prior art.

The embodiments of a first aspect of the present application provide a communication system, including: a control end with a control function and a processing end with a processing function, where the control end includes one or more controllers, and the processing end includes one or more processors; and a gateway, deployed in a communication process of any processor in the processing end, where the gateway includes an internal space and an external space, is connected to a global data space through the external space, and is connected to the one or more controllers and other processors through the internal space; and on the basis of an authentication identifier configured for the processor, the processor is selected to communicate with other processors, the controllers are selected to directly communicate with the processor, or communication data between the controllers and the processor is forwarded through the gateway.

According to the above technical means, the embodiments of the present application can deploy the gateway in the communication process of any processor in the processing end, connect the gateway to the global data space through the external space, connect the gateway to the controllers and the processor through the internal space, and select, on the basis of the authentication identifier configured for the processor, the controllers to directly communicate with the processor and different processors to communicate with each other, or forward the communication data between the controllers and the processor through the gateway, so that intercommunication between the processor and the controllers is achieved, and the controllers can directly use a global data space protocol stack for communication. This effectively reduces the resource occupancy rate of the controllers, and achieves that under a condition of limited resources of the controllers, the controllers can accommodate proxy entities in a quantity that is matched with the processor end. Requirements of different communication delays during transmission are met, and the applicability is high.

Optionally, the internal space includes a first internal space and a second internal space; and the first internal space and the second internal space are connected to the controllers and other processors through different interfaces.

According to the above technical means, in the embodiments of the present application, the first internal space and the second internal space are connected to the controllers and the processor through different interfaces, so that the gateway is compatible and can be compatible with a direct-communication scheme.

Optionally, the authentication identifier includes first to third identifiers; if the authentication identifier is the first identifier, the processor communicates with other processors; if the authentication identifier is the second identifier, the processor directly communicates with the controllers; and if the authentication identifier is the third identifier, and a desired data transmission delay between the controllers and the processor is less than a preset delay, the controllers and the processor communicate directly, otherwise, the communication data between the controllers and the processor is forwarded through the gateway.

According to the above technical means, in the authentication identifier of the embodiments of the present application, the first identifier is used for communication between different processors; the second identifier is used for direct communication between the processor and the controllers; and the third identifier is used for selecting different manners for communication according to a data transmission delay. When the desired data transmission delay between the processor and the controllers is less than the preset delay, the processor is selected to communicate with the controllers, otherwise, the communication data between the controllers and processor is forwarded through the gateway, so as to ensure that the controllers can be reasonably connected to relevant participant entities, selectively establish connections to relevant participants, save an internal memory consumed by entity information of an opposite end, and control the occupation of unnecessary remote entities through an appropriate mechanism.

Optionally, the gateway communicates with the communication process of the processor through a network, and the gateway communicate with the controllers in a multicast or unicast manner.

According to the above technical means, the gateway communicates with the communication process of the processor in the present application in the multicast or unicast manner. The multicast or unicast manner can shield invalid data, save own resources, and ensure scheduling of an MCU.

Optionally, the processor communicates with other processors through the deployed gateway.

According to the above technical means, in the embodiments of the present application, the processor communicates with other processors through the deployed gateway, and the data is forwarded through the gateway, without affecting scheduling of the processor.

Optionally, the communication data between the gateway and the processor is filtered through a service identity document (ID) and a method ID.

According to the above technical means, in the embodiments of the present application, the communication data between the gateway and the processor is filtered through the service ID and the method ID, so that normal data can pass through, but redundant data or invalid data cannot pass through, which improves the communication quality and ensures the scheduling of the controllers.

Optionally, multicast addresses of all applications in the controllers, multicast addresses of all applications in the processor, and a multicast address of the global data space are isolated from one another.

According to the above technical means, in the embodiments of the present application, the multicast addresses of all the applications in the controllers, the processor, and the global data space are isolated from one another, which avoids data from being sent to wrong addresses to cause confusion of the data, and ensures that multicast messages will not be affected by one another.

Optionally, multicast isolation addresses of the processor, the controllers, and the global data space are different.

According to the above technical means, in the embodiments of the present application, the multicast isolation addresses of the processor, the controllers, and the global data space are different, which avoids the confusion of the data, and ensures that the multicast messages will not be affected by one another.

Optionally, a publishing end and a subscription end in a same multicast send messages through a current multicast address; and a publishing end and a subscription end in different multicasts send messages through a multicast address in the multicast where the subscription end is located.

According to the above technical means, in the embodiments of the present application, the publishing end and the subscription end in the same multicast send the messages through the current multicast address, and the publishing end and the subscription end in different multicasts send the messages through the multicast address in the multicast where the subscription end is located, so that it is ensured that the multicast messages will not be affected by one another.

Optionally, the applications of the processor are partitioned and configured, so that the applications of the processor communicate with the gateway, the processor communicates with the applications of other processors, and the applications within the processors communicate with each other.

According to the above technical means, in the embodiments of the present application, the applications of the processor are partitioned and configured, so that the applications of the processor communicate with the gateway, the processor communicates with the applications of other processors, and the applications within the processors communicate with each other. This improves the communication efficiency.

Optionally, the processing end is configured with one or more interfaces.

Optionally, the control end is a microcontroller unit (MCU) end; the processing end is a microprocessor unit (MPU) end; the controller is an MCU; and the processor is an MPU.

The embodiments of a second aspect of the present application provide a vehicle, including the communication system as described in the above embodiments.

The embodiments of a third aspect of the present application provide a communication method. The method is applied to the communication system as described in the above embodiments. The method includes the following steps: identifying an authentication identifier of any processor deployed in the processing end; and selecting, on the basis of the authentication identifier, the processor to communicate with other processors and the controllers to directly communicate with the processor, or forwarding communication data between the controllers and the processor through the gateway, where the authentication identifier includes first to third identifiers; if the authentication identifier is the first identifier, the processor communicates with other processors; if the authentication identifier is the second identifier, the processor directly communicates with the controllers; if the authentication identifier is the third identifier, and a desired data transmission delay between the controllers and the processor is less than a preset delay, the controllers are selected to directly communicate with the processor; otherwise, the communication data between the controllers and the processor is forwarded through the gateway.

The embodiments of a fourth aspect of the present application provide a computer-readable storage medium, storing a computer program. The program, when executed by a processor, implements the communication method as described in the above embodiments.

Thus, the present application at least has the following beneficial effects:
(1) The embodiments of the present application can deploy the gateway in the communication process of any processor in the processing end, connect the gateway to the global data space through the external space, connect the gateway to the controllers and the processor through the internal space, and select, on the basis of the authentication identifier configured for the processor, different processors to communicate with each other and the controllers to directly communicate with the processor, or forward the communication data between the controllers and the processor through the gateway, so that intercommunication between the controllers and the processor is achieved, and the controllers can directly use a global data space protocol stack for communication. This effectively reduces the resource occupancy rate of the controllers, and achieves that under a condition of limited resources of the controllers, the controllers can accommodate proxy entities in a quantity that is matched with the processor. Requirements of different communication delays during transmission are met, and the applicability is high.
(2) In the embodiments of the present application, the first internal space and the second internal space are connected to the controllers and the processor through different interfaces, so that the gateway is compatible and can be compatible with a direct-communication scheme.
(3) In the authentication identifier of the embodiments of the present application, the first identifier is used for communication between different processors; the second identifier is used for direct communication between the processor and the controllers; and the third identifier is used for selecting different manners for communication according to a data transmission delay. When the desired data transmission delay between the processor and the controllers is less than the preset delay, the processor is selected to communicate with the controllers, otherwise, the communication data between the controllers and processor is forwarded through the gateway, so as to ensure that the controllers can be reasonably connected to relevant participant entities, selectively establish connections to relevant participants, save an internal memory consumed by entity information of an opposite end, and control the occupation of unnecessary remote entities through an appropriate mechanism.
(4) The gateway communicates with the communication process of the processor in the present application in the multicast or unicast manner. The multicast or unicast manner can shield invalid data, save own resources, and ensure scheduling of the controllers.
(5) In the embodiments of the present application, the processor communicates with other processors through the deployed gateway, and the data is forwarded through the gateway, without affecting scheduling of the processor.
(6) In the embodiments of the present application, the communication data between the gateway and the processor is filtered through the service ID and the method ID, so that normal data can pass through, but redundant data or invalid data cannot pass through, which improves the communication quality and ensures the scheduling of the controllers.
(7) In the embodiments of the present application, the multicast addresses of all the applications in the controllers, the processor, and the global data space are isolated from one another, which avoids data from being sent to wrong addresses to cause confusion of the data, and ensures that multicast messages will not be affected by one another.
(8) In the embodiments of the present application, the multicast isolation addresses of the processor, the controllers, and the global data space are different, which avoids the confusion of the data, and ensures that the multicast messages will not be affected by one another.
(9) In the embodiments of the present application, the publishing end and the subscription end in the same multicast send the messages through the current multicast address, and the publishing end and the subscription end in different multicasts send the messages through the multicast address in the multicast where the subscription end is located, so that it is ensured that the multicast messages will not be affected by one another.
(10) In the embodiments of the present application, the applications of the processor are partitioned and configured, so that the applications of the processor communicate with the gateway, the processor communicates with the applications of other processors, and the applications within the processors communicate with each other. This improves the communication efficiency.

The additional aspects and advantages of the present application will be partially provided in the following descriptions, some of which will become apparent from the following descriptions, or learned through the practice of the present application.

### Brief Description of the Drawings

The above and/or additional aspects and advantages of the present application will become apparent and easy to understand from the descriptions of the embodiments in conjunction with the accompanying drawings below:
FIG. 1 is a schematic diagram of a communication system according to an embodiment of the present application;
FIG. 2 is a diagram of a DDS protocol stack and resources occupied by respective entities according to an embodiment of the present application;
FIG. 3 is a block diagram of an overall scheme according to an embodiment of the present application;
FIG. 4 is a diagram of DDS gateway fusion according to an embodiment of the present application;
FIG. 5 is a diagram of controllers configured with Local according to an embodiment of the present application;
FIG. 6 is a diagram of processors configured with direct according to an embodiment of the present application;
FIG. 7 is a diagram of processors configured with proxy according to an embodiment of the present application;
FIG. 8 is a diagram of deploying a gateway on a processor according to an embodiment of the present application; and
FIG. 9 is a flowchart of a communication method according to an embodiment of the present application.

### Detailed Description of the Embodiments

The embodiments of the present application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining the present application, and should not be construed as a limitation on the present application.

An SOA software architecture in the field of automobiles is gradually used. Under a design concept of the SOA software architecture, automobile software architectures are developed towards stratification and modularization, so that functions of application layers can be reused on different vehicle models, hardware platforms, and operating systems, and application functions can be quickly iterated and upgraded through standardized interfaces. A DDS, as a new generation of distributed real-time communication middleware protocol, adopts a publishing/subscription architecture, emphasizes data centricity, and provides rich QoS policies, so as to ensure real-time, efficient, and flexible distribution of data, which can meet requirements of various distributed real-time communication applications. Communication between a controller and a processor is completed by the DDS on an automobile.

At present, resources of the controller that can be allocated to a DDS protocol stack are about 200 K to 300 K. A remote entity of the processor will be built on the controller to satisfy the communication between the processor and the controller, which will consume the resources of the controller. Therefore, a quantity of participants established on the controller will be restrained. In order to solve the problem of insufficient DDS resources on the controller, the occupation of a size of the remote entity (1 participant+ 1 writer+1 reader) on the controller has been optimized from 15 KB to be within 4 KB, and a controller-data distribution service has been optimized and cut. However, in order to follow basic DDS specification characteristics, the optimization of the DDS protocol stack has reached its limit, so solving the problem of limited resources on the controller is particularly important.

Therefore, based on an implementation principle of a DDS communication technology, in conjunction with the processing performance of the controller and contents such as a functional application requirement, a performance requirement, and a security requirement, the present application designs a direct-communication scheme and reasonably deploys a DDS gateway to achieve the intercommunication between the controller and the processor.

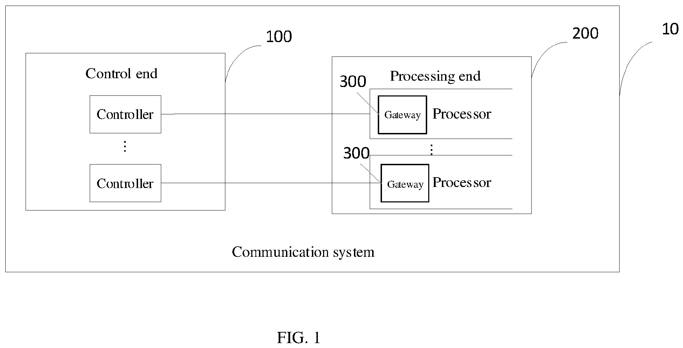

A communication system and method, a vehicle, and a medium of the embodiments of the present application will be described below with reference to the accompanying drawings. Specifically, FIG. 1 is a schematic diagram of a communication system according to an embodiment of the present application.

As shown in FIG. 1, the communication system 10 includes: a control end 100, a processing end 200, and a gateway 300.

The control end 100 has a control function, and the control end 100 includes one or more controllers. The processing end 200 has a processing function, and the processing end 200 includes one or more processors. The gateway 300 is deployed in a communication process of any processor in the processing end 200. The gateway 300 includes an internal space and an external space, is connected to a global data space through the external space, and is connected to the one or more controllers and other processors through the internal space; and on the basis of an authentication identifier configured for the processor, the processor is selected to communicate with other processors, the controllers are selected to directly communicate with the processor, or communication data between the controllers and the processor is forwarded through the gateway.

The control end 100 is an MCU end, and the processing end 200 is an MPU end. The controller is an MCU, and the processor is an MPU. The MPU and the MCU will be explained in the following embodiments.

The processing end 200 is configured with one or more interfaces. A type of the processor and a type of the controller can be specifically selected according to an actual requirement. The gateway 300 can be a gateway with a DDS. The internal space can include a first internal space and a second internal space. The first internal space and the second internal space are connected to the controllers and other processors through different interfaces. The global data space refers to a local data storage region, which will not be specifically limited here.

It can be understood that the embodiments of the present application deploy the gateway in the communication process of any processor in the processing end, connect the gateway to the global data space through the external space, connect the gateway to the controllers and the processor through the internal space, and select, on the basis of the authentication identifier configured for the processor, different processors to communicate with each other and the controllers to directly communicate with the processor, or forward the communication data between the controllers and the processor through the gateway, to achieve direct communication or indirect communication between the MCU end and the MPU end, so that intercommunication between the MCUs and the MPU is achieved, and the MCUs can directly use a global data space protocol stack for communication. This effectively reduces the resource occupancy rate of the MCUs, and achieves that under a condition of limited resources of the MCUs, the MCUs can accommodate proxy entities in a quantity that is matched with the MPU. Requirements of different communication delays during transmission are met, and the applicability is high.

In the embodiments of the present application, the authentication identifier can include first to third identifiers; if the authentication identifier is the first identifier, the processor communicates with other processors; if the authentication identifier is the second identifier, the processor directly communicates with the controllers; and if the authentication identifier is the third identifier, and a desired data transmission delay between the controllers and the processor is less than a preset delay, the controllers and the processor communicate directly, otherwise, the communication data between the controllers and the processor is forwarded through the gateway 300.

The preset delay can be set according to an actual intention of a user or according to a data transmission delay requirement, and will not be specifically limited here.

It can be understood that in order to ensure reasonable connection of relevant participant entities to an MCU side, selectively establish connections to relevant participants in the same internal space, and save an internal memory consumed by entity information of an opposite end, the embodiments of the present application use an authentication method. Authentication is to control unnecessary remote entity occupation on the MCUs through an appropriate mechanism.

It should be noted that to achieve the communication between the processor and controllers in the embodiments of the present application, the authentication identifier can be selected or set according to an actual delay requirement. For example, if a small delay is desired, the second identifier can be selected. For another example, if a requirement for a communication delay is medium, the third identifier can be selected, and when the third identifier is selected, a communication manner can be switched according to a dynamic change in the communication delay. Furthermore, it is usually expected that the communication delay corresponding to the third identifier is usually expected to be greater than the communication delay corresponding to the second identifier.

An example of authentication is as follows:
Each participant on the MPU provides three kinds of identifiers.
First identifier: DEFAULT_TOKEN-a default token, meaning that it can only communicate with the MPU;
second identifier: DIRECT_VIU_TOKEN-meaning that it can simultaneously communicate with both a VIU and the MPU (direct communication); and
third identifier: PROXY_TOKEN-meaning that it can communicate with the MPU or communicate with the MCUs through the gateway.

In the embodiments of the present application, the gateway 300 communicates with the communication process of the processor through a network, and the gateway 300 communicates with the controllers in a multicast or unicast manner.

The processor communicates with other processors through the deployed gateway.

Multicast, also referred to as multi-target broadcast, allows a sent message to be transmitted to a selected subset of all possible destinations, that is, transmitting information to various clearly indicated addresses. The multicast is a method for communication between a sender and a plurality of receivers. For example, when a source host sends an information requirement to multiple target hosts, the source host only sends one piece of data, and a destination address of the data is an address of a multicast group. In this way, all members belonging to this group can receive a copy of the data sent by the source host. In this multicast method, only members who truly need information will receive the information, and other hosts will not receive the information.

Unicast is point-to-point connection between a client and a server, which achieves communication between a single sender and a receiver through a network.

It can be understood that in the embodiments of the preset application, the gateway communicates with the communication process of the processor in the multicast or unicast manner. By the multicast or unicast manner, the MCU end can shield invalid data and save own resources.

In the embodiments of the present application, the communication data between the gateway 300 and the processor is filtered through a service ID and a method ID.

It can be understood that in the embodiments of the present application, the communication data between the gateway and the processor is filtered through the service ID and the method ID, so that normal data can pass through, but redundant data or invalid data cannot pass through, which improves the communication quality and ensures the scheduling of the MCUs.

In the embodiments of the present application, multicast addresses of all applications in the controllers, multicast addresses of all applications in the processor, and a multicast address of the global data space are isolated from one another.

Multicast isolation addresses of the processor, the controllers, and the global data space are different.

It can be understood that in the embodiments of the present application, the multicast addresses of the processor, the controllers, and the global data space are isolated from one another, which avoids data from being sent to wrong addresses to cause confusion of the data, and ensures that multicast messages will not be affected by one another.

In the embodiments of the present application, a publishing end and a subscription end in a same multicast send messages through a current multicast address; and a publishing end and a subscription end in different multicasts send messages through a multicast address in the multicast where the subscription end is located.

It can be understood that in the embodiments of the present application, the publishing end and the subscription end in the same multicast send the messages through the current multicast address, and the publishing end and the subscription end in different multicasts send the messages through the multicast address in the multicast where the subscription end is located, so that it is ensured that the multicast messages will not be affected by one another.

Specifically, the isolation of the multicast does not mean that user data is not accessible, but:
1. One pub (publisher) and multiple subs (subscribers) within a multicast group send messages through the current multicast address.
2. One pub and multiple subs within different multicast groups send messages through the multicast address where the subs are located.
3. One pub and multiple subs within a multicast group multicast messages, which will not affect an unmatched sub end of another multicast group.

In the embodiments of the present application, the applications of the processor are partitioned and configured, so that the applications of the processor communicate with the gateway, the processor communicates with the applications of other processors, and the applications within the processors communicate with each other.

It can be understood that in the embodiments of the present application, the applications of the processor are partitioned and configured, so that the applications of the processor communicate with the gateway, the processor communicates with the applications of other processors, and the applications within the processors communicate with each other. This improves the communication efficiency.

The communication system according to the embodiments of the present application can deploy the gateway in the communication process of any processor in the processing end, connect the gateway to the global data space through the external space, connect the gateway to the controllers and the processor through the internal space, and select, on the basis of the authentication identifier configured for the processor, different processors to communicate with each other and the controllers to directly communicate with the processor, or forward the communication data between the controllers and the processor through the gateway, so that intercommunication between the MCUs and the MPU is achieved, and the MCUs can directly use a global data space protocol stack for communication. This effectively reduces the resource occupancy rate of the MCUs, and achieves that under a condition of limited resources of the MCUs, the MCUs can accommodate proxy entities in a quantity that is matched with the MPU. Requirements of different communication delays during transmission are met, and the applicability is high. Therefore, the problems of low applicability and the like caused by the fact that the MCUs cannot accommodate entities in a quantity matched with the MPU end under a condition of limited resources of the MCUs, and a communication delay in the prior art are solved.

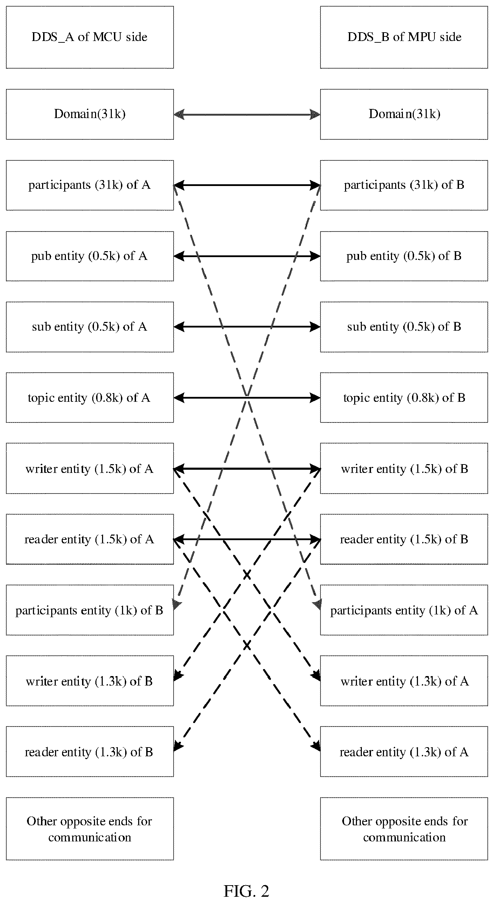

The communication system will be described in detail below in conjunction with FIG. 2 to FIG. 8. The following embodiments take an MCU and an MPU as an example, specifically as follows:
The problem of insufficient DDS resources on the MCU is as shown in FIG. 2. The occupation of a size of the remote entity (1 participant+1 writer+1 reader) on the MCU has been optimized, and MCU-DDS has been optimized and cut. However, in order to follow basic DDS specification characteristics, the optimization of the DDS protocol stack has reached its limit.

Based on an implementation principle of a DDS communication technology, in conjunction with the processing performance of the MCU and contents such as a functional application requirement, a performance requirement, and a security requirement, the present application designs a direct-communication scheme and reasonably deploys a DDS gateway to achieve the intercommunication between the MCU and the MPU. When a requirement for a data transmission delay is high, the MCU directly communicates with the MPU. When a requirement for a delay is low, data is forwarded through the gateway, specifically as follows:

### I. Communication between the MCU and the MPU

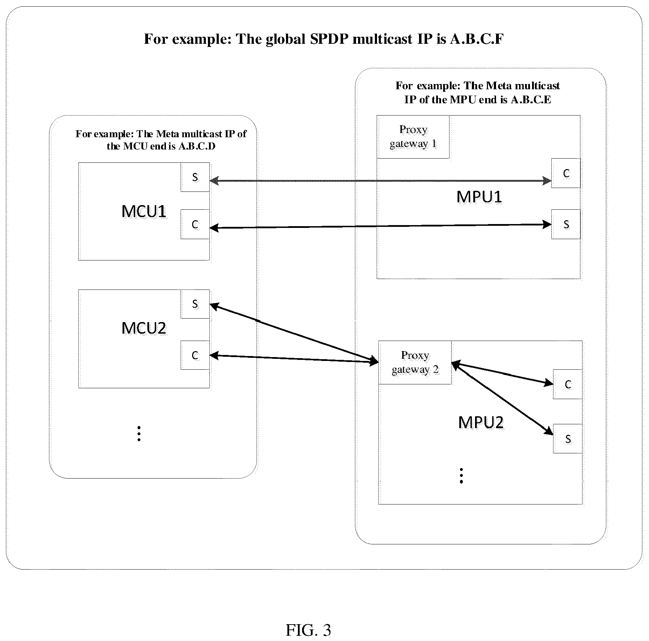

The MCU side and MPU side implement multicast isolation to ensure the scheduling of the MCU. Due to aggregation of topics on the MCU in a DDS system and use of unequal communication and other contents, most of the existing communication modes in the DDS system use multicast or broadcast, which will cause the MCU to receive a lot of invalid data and overflow of a receiving cache of the MCU. Therefore, multicast isolation is required, as shown in FIG. 3. Specific isolation manners are as follows:
1. Specific IPs are set for all DDS applications on the MCU side. For example, a Meta multicast IP is set to be A, B, C, D, and the like, which can be set according to an actual application need.
2. Specific IPs are set for all DDS applications on the MPU side. For example, a Meta multicast IP is set to be A, B, C, E, and the like, which can be set according to an actual application need.
3. Specific IPs are set for all DDS applications on the global data space. For example, an SPDP multicast IP is set to be A, B, C, F, and the like, which can be set according to an actual application need.
4. All the DDS applications of the global data space are located in the same DDS global data space (a domain).
5. In order to be compatible with a gateway scheme, the DDS applications on the MPU side need to be reasonably configured with a partition to ensure that MPU applications<->proxy gateway, MPU applications<->MCU applications, MPU applications<->MPU applications can all communicate with each other.
6. DDS authentication is set on the MCU side. Participants only carrying user_data(token1) on the MPU side can be directly connected to the MCU. Meanwhile, DDS authorization is also set on the proxy gateway. Participants only carrying user_data(token2) on the MPU side can be connected to the proxy gateway.
7. Meanwhile, according to the proxy gateway scheme, multiple network ports are configured for the applications on the MPU side. This ensures that an interaction with a local proxy gateway is limited to a loopback interface.

### II. Modification and adaptation of the gateway

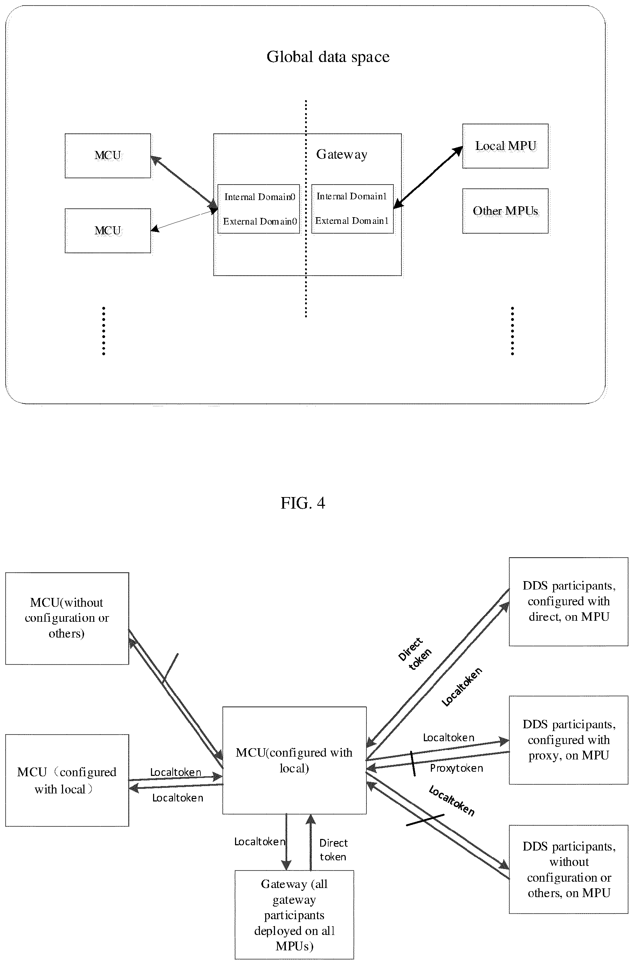

1) Explanation of gateway deployment (FIG. 4): The gateway only needs to complete the communication between the MCU and the MPU. Therefore, the gateway is deployed in one process of the MPU that needs to communicate with the MCU. When there is a process needing to communicate with the MCU, the process first sends data to a process of the gateway, and then the gateway forwards the data to the MCU.
2) The gateway can only communicate with the process of the MPU through a local loopback network.
3) The gateway and the MCU adopt a multicast or unicast form, so that the data is filtered through the service ID and the method ID.

In order to be compatible with the direct-communication scheme, modification and adaptation need to be made to the gateway as follows:
1) The gateway is externally connected to a unique global data space (domain0).
2) The interior of the gateway is also classified into domain0 and domain1, which are responsible for DDS forwarding on the MCU side and DDS forwarding on the MPU side, respectively.
3) Domain0 and domain1 inside the gateway are connected to the global data space through different network ports.
4) Domain1 inside the gateway is connected to a DDS application on the local MPU through a loopback interface.
5) Domain0 inside the gateway is connected to a DDS application on the MCU side through an external interface.

### III. Isolation of multicast

The isolation of the multicast does not mean that user data is not accessible, but:
1. One pub (publisher) and multiple subs (subscribers) within a multicast group send messages through the current multicast address.
2. One pub and multiple subs within different multicast groups send messages through the multicast address where the subs are located.
3. One pub and multiple subs within a multicast group multicast messages, which will not affect an unmatched sub end of another multicast group.

### IV. Authentication and TOKEN

In order to ensure reasonable connection of relevant participant entities to the MCU side, selectively establish connections to relevant participants in the same domain, and save an internal memory consumed by entity information of an opposite end, an authentication method is used. Authentication is to control unnecessary remote entity occupation on the MCUs through an appropriate mechanism (authentication). An example of authentication is as follows:
Each participant on the MPU provides three kinds of tokens.
DEFAULT_TOKEN-a default token, meaning that it can only communicate with the MPU;
DIRECT_VIU_TOKEN-meaning that it can simultaneously communicate with both a VIU and the MPU (direct communication); and
PROXY_TOKEN-meaning that it can communicate with the MPU or communicate with the MCUs through the gateway.

A unique token LOCAL_VIU_TOKEN is set for the participants of the MCUs.

Meanwhile, locations where authentication needs to be set include:
1. Participants on the MCU: A Packet Data Protocol (PDP) is only allowed to discover an opposite end that is identified to carry userdata including DIRECT_VIU_TOKEN or LOCAL_VIU_TOKEN.
2. Participants on the MCU connected to the gateway: PDP is only allowed to discover an opposite end that is identified to carry userdata including LOCAL_VIU_TOKEN.
3. Participants on the MPU connected to the gateway: PDP is only allowed to discover an opposite end that is identified to carry userdata including PROXY TOKEN.

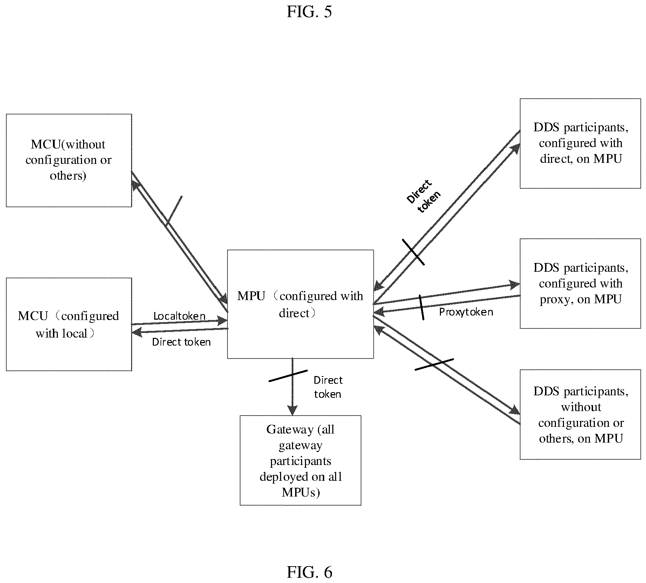

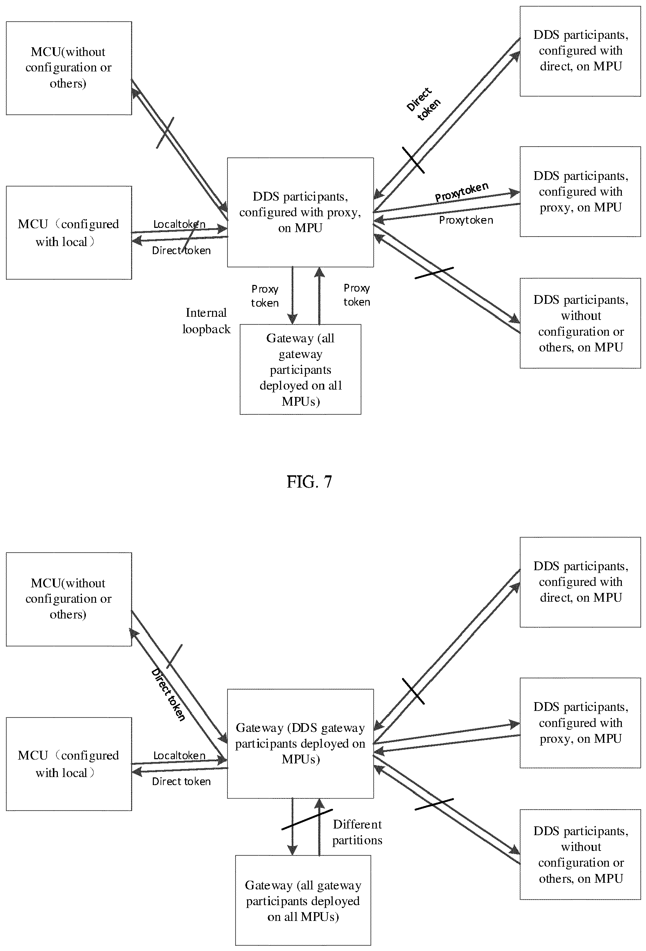

After the above configurations are completed, following effects are achieved:
(1) The MCUs configured with local can directly communicate with the DDS participants, configured with direct, on the MPUs, the MCUs configured with local, and the DDS gateways deployed on all the MPUs, as shown in FIG. 5.
(2) The DDS participants, configured with direct, on the MPUs can only communicate with all the MCUs and cannot communicate with the gateway and MPU participants, as shown in FIG. 6.
(3) The DDS participants, configured with proxy, on the MPUs can communicate with the DDS participants, configured with proxy, on the MPUs, and the gateway participants deployed on the MPUs, and can communicate indirectly with the MCUs through the gateway, as shown in FIG. 7.
(4) The DDS gateway deployed on the MPU can only communicate with the DDS participants in the MPU where the DDS gateway is deployed, and cannot communicate with the participants in other MPUs, as shown in FIG. 8.

In summary, the DDS-based communication system of the present application solves the problem of intercommunication between the MCU and the MPU. Furthermore, isolation of the Meta multicast addresses is performed on the MCU side and the MPU side, so that when the applications of the MPU side interact with each other through a large number of multicast messages, the scheduling of the MCUs will not be affected at all, which reduces the impact of multicast on a low-computing-power platform. In an SDA platform, the problem of single-point-of-failure needs to be guaranteed through gateway redundancy. Meanwhile, service decentration and other requirements are achieved under the SOA service architecture.

The embodiments of the present application provide a vehicle, including the communication system as described above.

The communication provided according to the embodiments of the present application is then descried with reference to the accompanying drawings.

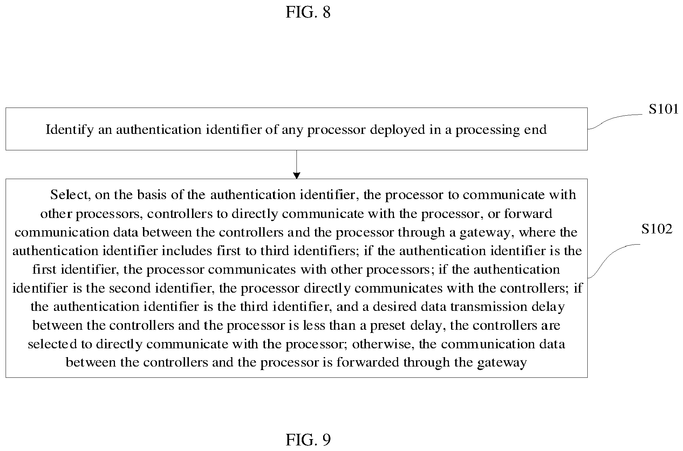

FIG. 9 is a flowchart of a communication method according to an embodiment of the present application.

As shown in FIG. 9, the communication method includes the following steps:
In step S101, an authentication identifier of any processor deployed in a processing end is identified.

It can be understood that in the embodiments of the present application, the authentication identifier of any processor deployed in the processing end is identified, which is convenient for subsequently selecting a communication manner.

In step S102, on the basis of the authentication identifier, the processor is selected to communicate with other processors, and controllers are selected to directly communicate with the processor, or communication data is forwarded between the controllers and the processor through a gateway, wherein the authentication identifier includes first to third identifiers; if the authentication identifier is the first identifier, the processor communicates with other processors; if the authentication identifier is the second identifier, the processor directly communicates with the controllers; if the authentication identifier is the third identifier, and a desired data transmission delay between the controllers and the processor is less than a preset delay, the controllers are selected to directly communicate with the processor; otherwise, the communication data between the controllers and the processor is forwarded through the gateway.

It can be understood that in the embodiments of the present application, connections are selectively established by comparing a desired data transmission delay between the controllers and the processor with a preset delay, so that connections can be established between different processors, direct communication can be performed between the controllers and the processor, or the communication data between the controllers and the processor can be forwarded through the gateway, to achieve intercommunication between the MCUs and the MPU. This effectively reduces the resource occupancy rate of the MCUs, and achieves that under a condition of limited resources of the MCUs, the MCUs can accommodate proxy entities in a quantity that is matched with the MPU end. Requirements of different communication delays during transmission are met, and the applicability is high.

According to the communication method provided by the embodiments of the present application, connections are selectively established by comparing a desired data transmission delay between the controllers and the processor with a preset delay, so that connections can be established between different processors, direct communication can be performed between the controllers and the processor, or the communication data between the controllers and the processor can be forwarded through the gateway. When the desired data transmission delay between the controllers and the processor is less than the preset delay, the manner of direct communication between the controllers and the processor is used, otherwise, the communication data between the controllers and the processor is forwarded through the gateway, to achieve intercommunication between the MCUs and the MPU. This effectively reduces the resource occupancy rate of the MCUs, and achieves that under a condition of limited resources of the MCUs, the MCUs can accommodate proxy entities in a quantity that is matched with the MPU end. Requirements of different communication delays during transmission are met, and the applicability is high.

The embodiments of the present application provide a computer-readable storage medium, storing a computer program. The program, when executed by a processor, implements the communication method as described above.

In the description of this specification, the description referring to the terms "one embodiment", "some embodiments", "an example", "specific examples", "some examples", or the like means that specific features, structures, materials or characteristics described in connection with the embodiments or examples are included in at least one embodiment or example of the present disclosure. In this specification, the schematic representations of the above terms are not necessarily intended to refer to the same embodiment or example. Furthermore, the specific features, structures, materials or characteristics described may be combined in any suitable manner in any one or N embodiments or examples. In addition, those skilled in the art may combine the different embodiments or examples described in this specification, as well as the features of different embodiments or examples, without mutual contradictions.

In addition, the terms "first" and "second" are used for descriptive purposes only and are not to be construed as indicating or implying relative importance or to implicitly indicate the number of technical features indicated. From this, features defined as "first" and "second" may explicitly or implicitly include at least one feature. In the description of the present application, "N" means at least two, for example, two and three, unless explicitly specified otherwise.

Any process or method description in the flowchart or otherwise described herein can be understood as a module, fragment, or part representing a code that includes one or more executable instructions for implementing steps customizing logic functions or processes, and the scopes of the preferred implementations of the present application include other implementations. The functions can be executed in a manner other than an order shown or discussed, including: a substantially simultaneous manner or a reverse order according to the functions involved. This shall be understood by those skilled in the art to which the embodiments of the present application belong.

It should be understood that the various parts of the present application can be implemented using hardware, software, firmware, or a combination of the above. In the above implementations, N steps or methods can be implemented using software or firmware stored in the memory and executed by an appropriate instruction execution system. For example, if it is implemented using hardware, as in another implementation, the steps or methods can be implemented using any of the following well-known technologies in the art or a combination of the technologies: a discrete logic circuit with a logic gate circuit for achieving a logic function on a data signal, an application-specific integrated circuit with an appropriate combined logic gate circuit, a programmable gate array, a field programmable gate array, and the like.

A person of ordinary skill in the art can understand that all or some of the steps in the methods of the foregoing embodiments may be completed by instructing related hardware through programs. The programs may be stored in a computer-readable storage medium. The programs, when executed, include one or a combination of the steps of the method embodiments.

The embodiments of the present application have been shown and described above, but it can be understood that the above embodiments are exemplary and cannot be understood as limitations on the present application. A person of ordinary skill in the art may make changes, modifications, substitutions, and transformations to the above embodiments within the scope of the present application.

## Claims

1. A communication system, comprising:
a control end with a control function and a processing end with a processing function, wherein the control end comprises one or more controllers, and the processing end comprises one or more processors; and
a gateway, deployed in a communication process of any processor in the processing end, wherein the gateway comprises an internal space and an external space, is connected to a global data space through the external space, and is connected to the one or more controllers and other processors through the internal space; and on the basis of an authentication identifier configured for the processor, the processor is selected to communicate with other processors, the controllers are selected to directly communicate with the processor, or communication data between the controllers and the processor is forwarded through the gateway.

2. The system according to claim 1, wherein the internal space comprises a first internal space and a second internal space; and the first internal space and the second internal space are connected to the controllers and other processors through different interfaces.

3. The system according to claim 1, wherein the authentication identifier comprises first to third identifiers; if the authentication identifier is the first identifier, the processor communicates with other processors; if the authentication identifier is the second identifier, the processor directly communicates with the controllers; and if the authentication identifier is the third identifier, and a desired data transmission delay between the controllers and the processor is less than a preset delay, the controllers and the processor communicate directly, otherwise, the communication data between the controllers and the processor is forwarded through the gateway.

4. The system according to claim 1, wherein the gateway communicates with the communication process of the processor through a network, and the gateway communicates with the controllers in a multicast or unicast manner.

5. The system according to claim 4, wherein the processor communicates with other processors through the deployed gateway.

6. The system according to claim 4, wherein the communication data between the gateway and the processor is filtered through a service identity document (ID) and a method ID.

7. The system according to claim 1, wherein multicast addresses of all applications in the controllers, multicast addresses of all applications in the processor, and a multicast address of the global data space are isolated from one another.

8. The system according to claim 7, wherein multicast isolation addresses of the processor, the controllers, and the global data space are different.

9. The system according to claim 6, wherein a publishing end and a subscription end in a same multicast send messages through a current multicast address; and a publishing end and a subscription end in different multicasts send messages through a multicast address in the multicast where the subscription end is located.

10. The system according to claim 1, wherein the applications of the processor are partitioned and configured, so that the applications of the processor communicate with the gateway, the processor communicates with the applications of other processors, and the applications within the processors communicate with each other.

11. The system according to claim 10, wherein the processing end is configured with one or more interfaces.

12. The system according to any one of claims 1 to 11, wherein the control end is a microcontroller unit (MCU) end; the processing end is a microprocessor unit (MPU) end; the controller is an MCU; and the processor is an MPU.

13. A vehicle, comprising the communication system according to any one of claims 1 to 12.

14. A communication method, wherein the method is applied to the communication system according to any one of claims 1 to 12, wherein the method comprises the following steps:
identifying an authentication identifier of any processor deployed in the processing end; and
selecting, on the basis of the authentication identifier, the processor to communicate with other processors, the controllers to directly communicate with the processor, or forwarding communication data between the controllers and the processor through the gateway, wherein the authentication identifier comprises first to third identifiers; if the authentication identifier is the first identifier, the processor communicates with other processors; if the authentication identifier is the second identifier, the processor directly communicates with the controllers; if the authentication identifier is the third identifier, and a desired data transmission delay between the controllers and the processor is less than a preset delay, the controllers are selected to directly communicate with the processor; otherwise, the communication data between the controllers and the processor is forwarded through the gateway.

15. A computer-readable storage medium, storing a computer program, wherein the program is executed by a processor to implement the communication method according to claim 14.
